# EUROPEAN PATENT APPLICATION

(11) **EP 4 412 288 A1**
(43) Date of publication of application: **07.08.2024**
(21) Application number: 23202869.6
(22) Date of filing: 11.10.2023
(51) Int. Cl.: H04W 24/02, H04L 41/16, H04W 8/22

(54) **TRAINING MODELS SPECIFIC OR GENERIC FOR SUBSET(S) OF USER EQUIPMENT CAPABILITY CLASSES**

(30) Priority: 03.02.2023 GB 202301534
(71) Applicant: Nokia Technologies Oy, 02610 Espoo (FI)
(72) Inventor: SINAIE, Mahnaz, Espoo (FI); ALI-TOLPPA, Janne, Pirkkala (FI); MWANJE, Stephen, Dorfen (DE)
(74) Representative: Nokia EPO representatives

(57) **Abstract**

The disclosure relates to an apparatus configured to: receive (900), from user equipment, user equipment capability information; compute (902) statistics for a set of user equipment capability classes based on the user equipment capability information; and cause (904) a network management function to train models specific for at least a subset of user equipment capability classes selected amongst the set of user equipment capability classes based on the statistics for a set of user equipment capability or to train a model generic for at least a subset of user equipment capability classes selected amongst the set of user equipment capability classes based on the statistics for a set of user equipment capability classes.

## Description

### Field of the disclosure

The present disclosure relates to an apparatus, a method, and a computer program for training models specific for at least a subset of user equipment capability classes or a model generic for at least a subset of user equipment capability classes in a communication system.

### Background

A communication system can be seen as a facility that enables communication sessions between two or more entities such as communication devices, base stations and/or other nodes by providing carriers between the various entities involved in the communications path.

The communication system may be a wireless communication system. Examples of wireless systems comprise public land mobile networks (PLMN) operating based on radio standards such as those provided by 3GPP, satellite based communication systems and different wireless local networks, for example wireless local area networks (WLAN). The wireless systems can typically be divided into cells, and are therefore often referred to as cellular systems.

The communication system and associated devices typically operate in accordance with a given standard or specification which sets out what the various entities associated with the system are permitted to do and how that should be achieved. Communication protocols and/or parameters which shall be used for the connection are also typically defined. Examples of standard are the so-called 5G standards.

### Summary

According to an aspect there is provided an apparatus comprising at least one processor and at least one memory including computer code for one or more programs, the at least one memory and the computer code configured, with the at least one processor, to cause the apparatus at least to: receive, from user equipment, user equipment capability information; compute statistics for a set of user equipment capability classes based on the user equipment capability information; and cause a network management function to train models specific for at least a subset of user equipment capability classes selected amongst the set of user equipment capability classes based on the statistics for a set of user equipment capability or to train a model generic for at least a subset of user equipment capability classes selected amongst the set of user equipment capability classes based on the statistics for a set of user equipment capability classes.

Selecting at least a subset of user equipment capability classes amongst the set of user equipment capability classes may comprise selecting a subset of user equipment capability classes amongst the set of user equipment capability classes or selecting the whole set of user equipment capability classes.

The user equipment capability information may comprise at least one of: a memory space available at the user equipment to store a model; a number of bits used by the user equipment to represent a model parameter; or a number of trainable model parameters used by the user equipment.

Each user equipment capability class of the set of user equipment capability classes may comprise a different combination of user equipment capability information.

The at least one memory and the computer code may be configured, with the at least one processor, to cause the apparatus at least to: identify the set of user equipment capability classes based on the user equipment capability information; identify the set of user equipment capability classes based on user equipment capability classes predefined at the apparatus; receive, from the network management function, the set of user equipment capability classes identified by the network management function based on previous statistics for a previous set of user equipment classes sent by the apparatus to the network management function; or receive, from the network management function, the set of user equipment capability classes identified by the network management function based on user equipment capability classes predefined at the network management function.

The statistics for the set of user equipment capability classes may comprise a number of user equipment connected to the apparatus for each user equipment capability class of the set of user equipment capability classes.

The at least one memory and the computer code may be configured, with the at least one processor, to cause the apparatus at least to: receive, from the network management function, a request to compute the statistics for the set of user equipment capability classes based on the user equipment capability information.

The at least one memory and the computer code may be configured, with the at least one processor, to cause the apparatus at least to: send, to a network management function, the statistics for the set user equipment capability classes to cause the network management function to select at least the subset of user equipment capability classes amongst the set of user equipment capability classes based on the statistics for the set of user equipment capability classes and to train the models specific for at least the subset of user equipment capability classes or the model generic for at least the subset of user equipment capability classes.

The at least one memory and the computer code may be configured, with the at least one processor, to cause the apparatus at least to: select at least the subset of user equipment capability classes amongst the set of user equipment capability classes based on the statistics for the set user equipment capability classes; and send, to the network management function, at least the subset of user equipment capability classes to cause the network management function to train the models specific for at least the subset of user equipment capability classes or the model generic for at least part the subset of user equipment capability classes.

Selecting at least the subset of user equipment capability classes amongst the set of user equipment capability classes based on the statistics for the set user equipment capability classes may comprise: selecting at least the subset of user equipment capability classes with one or more user equipment connected to the apparatus over one or more time period; selecting at least the subset of user equipment capability classes with the highest number of user equipment connected to the apparatus over one or more time period; or selecting at least the subset of user equipment capability classes with the highest change in the number of user equipment connected to the apparatus over one or more time period.

The at least one memory and the computer code may be configured, with the at least one processor, to cause the apparatus at least to: subscribe, with the network management function, to a notification that the models specific for at least the subset of user equipment capability classes are available or a notification that the model generic for at least the subset of user equipment capability classes is available; and receive, from the network management function, the notification that the models specific for at least the subset of user equipment capability classes are available or the notification that the model generic for at least the subset of user equipment capability classes is available.

The at least one memory and the computer code may be configured, with the at least one processor, to cause the apparatus at least to: send, to the network management function, a request to receive the models specific for at least the subset of user equipment capability classes or the model generic for at least the subset of user equipment capability classes.

The at least one memory and the computer code may be configured, with the at least one processor, to cause the apparatus at least to: receive, from the network management function, the models specific for at least the subset of user equipment capability classes or the model generic for at least the subset of user equipment capability classes.

The at least one memory and the computer code may be configured, with the at least one processor, to cause the apparatus at least to: transform the model generic for at least the subset of user equipment capability classes into models specific for the subset of user equipment capability classes.

The at least one memory and the computer code may be configured, with the at least one processor, to cause the apparatus at least to: send, to the user equipment, the models specific for at least the subset of user equipment capability classes.

The models specific for at least a subset of user equipment capability classes may be designed for allowing the user equipment to perform internal machine learning-based algorithms. An example of internal machine learning-based algorithm may be an internal machine learning-based algorithm managing beamforming at the user equipment.

The apparatus may be a base station.

The apparatus may be a gNode B.

According to an aspect there is provided an apparatus means for: receiving, from user equipment, user equipment capability information; computing statistics for a set of user equipment capability classes based on the user equipment capability information; and causing a network management function to train models specific for at least a subset of user equipment capability classes selected amongst the set of user equipment capability classes based on the statistics for a set of user equipment capability or to train a model generic for at least a subset of user equipment capability classes selected amongst the set of user equipment capability classes based on the statistics for a set of user equipment capability classes.

According to an aspect there is provided an apparatus comprising circuitry configured to: receive, from user equipment, user equipment capability information; compute statistics for a set of user equipment capability classes based on the user equipment capability information; and cause a network management function to train models specific for at least a subset of user equipment capability classes selected amongst the set of user equipment capability classes based on the statistics for a set of user equipment capability or to train a model generic for at least a subset of user equipment capability classes selected amongst the set of user equipment capability classes based on the statistics for a set of user equipment capability classes.

According to an aspect there is provided a method comprising: receiving, from user equipment, user equipment capability information; computing statistics for a set of user equipment capability classes based on the user equipment capability information; and causing a network management function to train models specific for at least a subset of user equipment capability classes selected amongst the set of user equipment capability classes based on the statistics for a set of user equipment capability or to train a model generic for at least a subset of user equipment capability classes selected amongst the set of user equipment capability classes based on the statistics for a set of user equipment capability classes.

According to an aspect there is provided a computer program comprising computer executable code which when run on at least one processor is configured to: receive, from user equipment, user equipment capability information; compute statistics for a set of user equipment capability classes based on the user equipment capability information; and cause a network management function to train models specific for at least a subset of user equipment capability classes selected amongst the set of user equipment capability classes based on the statistics for a set of user equipment capability or to train a model generic for at least a subset of user equipment capability classes selected amongst the set of user equipment capability classes based on the statistics for a set of user equipment capability classes.

According to an aspect there is provided an apparatus comprising at least one processor and at least one memory including computer code for one or more programs, the at least one memory and the computer code configured, with the at least one processor, to cause the apparatus at least to: train models specific for at least a subset of user equipment capability classes selected amongst a set of user equipment capability classes based on statistics for the set of user equipment classes or train a model generic for at least a subset of user equipment capability classes selected amongst a set of user equipment capability classes based on statistics for the set of user equipment classes.

The at least one memory and the computer code may be configured, with the at least one processor, to cause the apparatus at least to: receive, from a base station, previous statistics for a previous set of user equipment classes; identify the set of user equipment capability classes based on the previous statistics for the previous set of user equipment classes; and send, to the base station, the set of user equipment capability classes.

The at least one memory and the computer code may be configured, with the at least one processor, to cause the apparatus at least to: identify the set of user equipment capability classes based on user equipment capability classes predefined at the apparatus; and send, to a base station, the set of user equipment capability classes.

The at least one memory and the computer code may be configured, with the at least one processor, to cause the apparatus at least to: send, to a base station, a request to compute statistics for the set of user equipment capability classes based on user equipment capability information received by the base station from user equipment.

The at least one memory and the computer code may be configured, with the at least one processor, to cause the apparatus at least to: receive, from a base station, the statistics for the set of user equipment capability classes; select at least the subset of user equipment capability classes amongst the set of user equipment capability classes based on the statistics for the set of user equipment capability classes; and train the models specific for at least the subset of user equipment capability classes or the model generic for at least the subset of user equipment capability classes.

The at least one memory and the computer code may be configured, with the at least one processor, to cause the apparatus at least to: receive, from a base station, at least the subset of user equipment capability classes selected amongst the set of user equipment capability classes by the base station based on the statistics for the set user equipment capability classes; and train the models specific for at least the subset of user equipment capability classes or the model generic for at least the subset of user equipment capability classes.

The at least one memory and the computer code may be configured, with the at least one processor, to cause the apparatus at least to: send, to a base station, a notification that the models specific for at least the subset of user equipment capability classes are available or the notification that the model generic for at least the subset of user equipment capability classes is available.

The at least one memory and the computer code may be configured, with the at least one processor, to cause the apparatus at least to: receive, from a base station, a request to send the models specific for at least the subset of user equipment capability classes or the model generic for at least the subset of user equipment capability classes.

The at least one memory and the computer code may be configured, with the at least one processor, to cause the apparatus at least to: send, to a base station, the models specific for at least the subset of user equipment capability classes or the model generic for at least the subset of user equipment capability classes.

The at least one memory and the computer code may be configured, with the at least one processor, to cause the apparatus at least to: transform the model generic for at least the subset of user equipment capability classes into models specific for the subset of user equipment capability classes.

The apparatus may be a network management function.

The apparatus may be a core network function or an operation administration and maintenance function.

According to an aspect there is provided an apparatus means for: training models specific for at least a subset of user equipment capability classes selected amongst a set of user equipment capability classes based on statistics for the set of user equipment classes or train a model generic for at least a subset of user equipment capability classes selected amongst a set of user equipment capability classes based on statistics for the set of user equipment classes.

According to an aspect there is provided an apparatus comprising circuitry configured to: train models specific for at least a subset of user equipment capability classes selected amongst a set of user equipment capability classes based on statistics for the set of user equipment classes or train a model generic for at least a subset of user equipment capability classes selected amongst a set of user equipment capability classes based on statistics for the set of user equipment classes.

According to an aspect there is provided a method comprising: training models specific for at least a subset of user equipment capability classes selected amongst a set of user equipment capability classes based on statistics for the set of user equipment classes or train a model generic for at least a subset of user equipment capability classes selected amongst a set of user equipment capability classes based on statistics for the set of user equipment classes.

According to an aspect there is provided a computer program comprising computer executable code which when run on at least one processor is configured to: train models specific for at least a subset of user equipment capability classes selected amongst a set of user equipment capability classes based on statistics for the set of user equipment classes or train a model generic for at least a subset of user equipment capability classes selected amongst a set of user equipment capability classes based on statistics for the set of user equipment classes.

According to an aspect, there is provided a computer readable medium comprising program instructions stored thereon for performing at least one of the above methods.

According to an aspect, there is provided a non-transitory computer readable medium comprising program instructions stored thereon for performing at least one of the above methods.

According to an aspect, there is provided a non-volatile tangible memory medium comprising program instructions stored thereon for performing at least one of the above methods.

In the above, many different aspects have been described. It should be appreciated that further aspects may be provided by the combination of any two or more of the aspects described above.

Various other aspects are also described in the following detailed description and in the attached claims.

### List of abbreviations

- AF:: Application Function
- AMF:: Access and Mobility Management Function
- API:: Application Programming Interface
- BS:: Base Station
- CU:: Centralized Unit
- DL:: Downlink
- DU:: Distributed Unit
- gNB:: gNodeB
- GSM:: Global System for Mobile communication
- HSS:: Home Subscriber Server
- IoT:: Internet of Things
- LTE:: Long Term Evolution
- MAC:: Medium Access Control
- MS:: Mobile Station
- MTC:: Machine Type Communication
- NEF:: Network Exposure Function
- NF:: Network Function
- NR:: New radio
- NRF:: Network Repository Function
- OAM:: Operations, Administration and Maintenance
- PDU:: Packet Data Unit
- RAM:: Random Access Memory
- (R)AN:: (Radio) Access Network
- ROM:: Read Only Memory
- SMF:: Session Management Function
- TR:: Technical Report
- TS:: Technical Specification
- UE:: User Equipment
- UMTS:: Universal Mobile Telecommunication System
- 3GPP:: 3^{rd} Generation Partnership Project
- 5G:: 5^{th} Generation
- 5GC:: 5G Core network
- 5GS:: 5G System

### Brief Description of the Figures

Embodiments will now be described, by way of example only, with reference to the accompanying Figures in which:
Figure 1 shows a schematic representation of a 5G system;
Figure 2 shows a schematic representation of a control apparatus;
Figure 3 shows a schematic representation of a user equipment;
Figure 4 shows a schematic representation of a process for training models specific for at least a subset of user equipment capability classes at a base station;
Figure 5 shows a schematic representation of another process for training models specific for at least a subset of user equipment capability classes at a network management function;
Figure 6 shows a signaling diagram of a process for computing statistics for a set of user equipment capability classes;
Figure 7 shows a signaling diagram of a process for training models specific for at least a subset of user equipment capability classes at a network management function according to a first scenario;
Figure 8 shows a signaling diagram of another process for training models specific for at least a subset of user equipment capability classes at a network management function according to a second scenario;
Figure 9 shows a block diagram of a process for training models specific for at least a subset of user equipment capability classes at a network management function performed by a base station;
Figure 10 shows a block diagram of a process for training models specific for at least a subset of user equipment capability classes at a network management function performed by the network management function; and
Figure 11 shows a schematic representation of a non-volatile memory medium storing instructions which when executed by a processor allow a processor to perform one or more of the steps of the methods of Figures 9 and 10.

### Detailed Description of the Figures

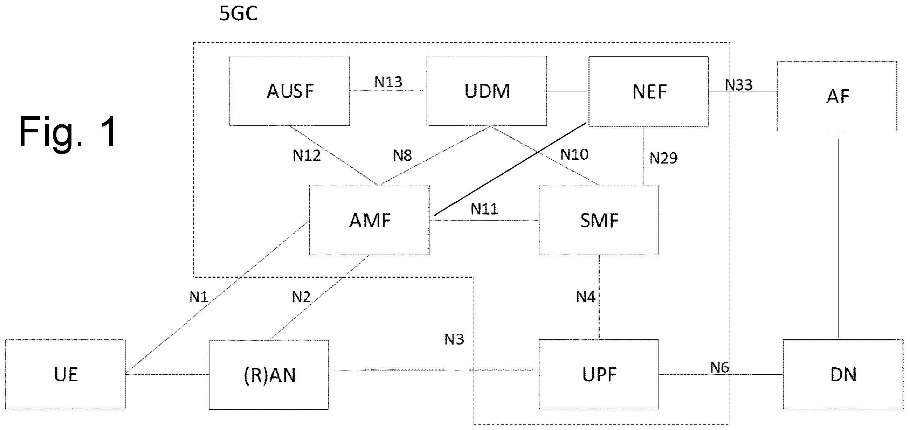

In the following certain embodiments are explained with reference to mobile communication devices capable of communication via a wireless cellular system and mobile communication systems serving such mobile communication devices. Before explaining in detail the exemplifying embodiments, certain general principles of a wireless communication system, access systems thereof, and mobile communication devices are briefly explained with reference to Figures 1, 2 and 3 to assist in understanding the technology underlying the described examples.

Figure 1 shows a schematic representation of a 5G system (5GS). The 5GS may comprises a user equipment (UE), a (radio) access network ((R)AN), a 5G core network (5GC), one or more application functions (AF) and one or more data networks (DN).

The 5G (R)AN may comprise one or more gNodeB (gNB) distributed unit functions connected to one or more gNodeB (gNB) centralized unit functions.

The 5GC may comprise an access and mobility management function (AMF), a session management function (SMF), an authentication server function (AUSF), a user data management (UDM), a user plane function (UPF), a network exposure function (NEF).

The 5GS may comprise a network management function. The network management function may be part of the 5GC or may not be part of the 5GC. For example, the network management function may not be part of the 5GC and may comprise an operation administration and maintenance (OAM) function (not illustrated).

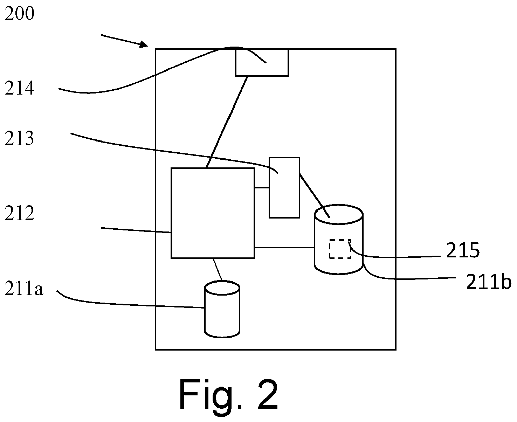

Figure 2 illustrates an example of a control apparatus 200 for controlling a function of the (R)AN or the 5GC as illustrated on Figure 1. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the 5G (R)AN or the 5GC. In some embodiments, each function of the (R)AN or the 5GC comprises a control apparatus 200. In alternative embodiments, two or more functions of the (R)AN or the 5GC may share a control apparatus.

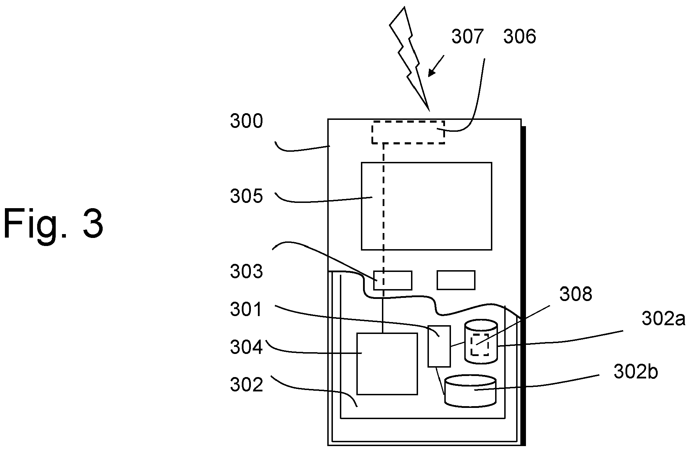

Figure 3 illustrates an example of a UE 300, such as the UE illustrated on Figure 1. The UE 300 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, a Cellular Internet of things (CIoT) device or any combinations of these or the like. The UE 300 may provide, for example, communication of data for carrying communications. The communications may be one or more of voice, electronic mail (email), text message, multimedia, data, machine data and so on.

The UE 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the mobile device.

The UE 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a.

The processor, storage and other relevant control apparatus can be provided on an appropriate circuit board and/or in chipsets. This feature is denoted by reference 304. The device may optionally have a user interface such as keypad 305, touch sensitive screen or pad, combinations thereof or the like. Optionally one or more of a display, a speaker and a microphone may be provided depending on the type of the device.

One or more aspects of this disclosure relates to artificial intelligence (AI) and more specifically to machine learning (ML). AI/MLs play a key role in network optimization and management tasks. Therefore, today AI/ML is studied in different standardization organizations, such as European telecommunications standards institute ETSI and 3rd generation partnership project (3GPP) and in different groups and contexts.

To have flexibility, adaptability to different scenarios and deployments and/or higher performance, ML may be enabled in all parts of the system including UEs. Different options have been studied for enabling AI/ML in the UEs. In most of these options, the expectation is that the role of the gNB may be to deploy AI/ML models to the UEs over the air interface. The role of the OAM may be to train and/or deploy AI/ML models to the gNB (if not trained at the gNB) and to configure the gNB to send the AI/ML models to the UEs. However, the requirements and procedures are not completely specified yet.

RP-213599, "Study on Artificial Intelligence (AI) / Machine Learning (ML) for NR Air Interface" studies the 3GPP framework for AI/ML for air-interface to study different target use cases and the corresponding aspects such as performance, complexity, and potential specification impacts. Several aspects of AI/ML model life cycle management (LCM) for NR air-interface may be addressed. These aspects may comprise such as data collection, AI/ML model training, AI/ML model deployment, AI/ML model monitoring, AI/ML model update, AI/ML model transfer, and UE AI/ML capability.

3GPP TS 28.105 and 3GPP 28.908 specify the AI/ML management capabilities and services for a 5GS where AI/ML is used. It also describes the functionality and service framework for AI/ML management. Based on the service-based management architecture, an AI/ML enabled function may be or may be related to a producer of AI/ML management services (also called the AI/ML MnS producer) providing services that are consumed by one or more consumers of AI/ML management services (also called the AI/ML MnS consumers).

More and more AI/ML models are deployed in mobile networks for increased level of automation and adaptability. As a result, different areas of the network have network functions (NFs) containing or based on AI/ML models requiring LCM. 3GPP RAN groups have started a study item on UE AI/ML models and the required LCM.

AI/ML models LCM may comprise AI/ML model training, AI/ML model preparation, AI/ML model deployment and inference and to define where and how they should be done. Each of these operations may be executed in different places, in the 5GC, in the 5G (R)AN, in the UE, within 3GPP domain or over-the-top (OTT), leading to potentially different combinations and permutations.

Since the UE have diverse AI/ML capabilities, the AI/ML models may need to be compiled for specific combinations of AI/ML capabilities. This may include AI/ML model scaling and/or optimization for a certain hardware, software, etc. The compilation for specific combinations of AI/ML capabilities may be before before the AI/ML models are deployed.

If the 5GC is in charge of AI/ML model training, AI/ML model training can be done in an OAM. If the 5G (R)AN is in charge of AI/ML model training, AI/ML model training can be done in a gNB. AI/ML model training is usually a computationally heavy and expensive process. A gNB has less computational capacity than OAM. Therefore, it may be advantageous to consider a gNB for AI/ML model deployment and a OAM for AI/ML model training. Another reason for doing AI/ML model training in a OAM may be that it has more data available than a gNB (i.e. the data may be received from several gNBs). As a result, an OAM may be an option to operate an AI/M model repository.

Existing OAMs may not perform AI/ML model training and AI/ML model processing (e.g. compressing or compiling) accounting for UE AI/ML capabilities. Existing OAMs may perform AI/ML model training and AI/ML model processing without accounting for UE AI/ML capabilities. Alternatively, existing OAMs may not perform AI/ML model training and AI/ML model processing.

Existing gNBs may perform AI/ML model training and AI/ML model processing when requested by UE. AI/ML training may be time-consuming and computationally demanding. Creating AI/ML models specific for combinations of UE AI/ML capabilities, even based on already trained generic AI/ML models, when requested by UEs, may in many cases be too slow. Hence, it is possible that the gNB is not able to perform AI/ML model training and AI/ML model processing in time.

Moreover, there are a lot of UEs with different combinations of UE AI/ML capabilities. These UEs may require different /ML models specific to combinations of UE AI/ML capabilities. As a result, perform AI/ML model training and AI/ML model processing for AI/ML models specific for combinations of UE AI/ML capabilities, just in case one these AI/ML models will be requested by a UE, can be very wasteful on computational resources and energy consumption either in a OAM or a gNB.

Several technical problems may be identified.

Technical problem 1: How to enable a gNB to compute and/or distribute statistics for combinations of UE AI/ML capabilities? How to enable an OAM to receive statistics for combinations of UE AI/ML capabilities?

Technical problem 2: How to enable a gNB to use the statistics for combinations of UE AI/ML capabilities to increase the computational resource and energy efficiency? How to enable an OAM to use the statistics for combinations of UE AI/ML capabilities to increase the computational resource and energy efficiency?

Technical problem 3: Which UE AI/ML UE capabilities should be considered to compute statistics for combinations of UE AI/ML capabilities?

Technical problem 4: How to enable an OAM to train AI/ML models specific for combinations of UE AI/ML UE capabilities?

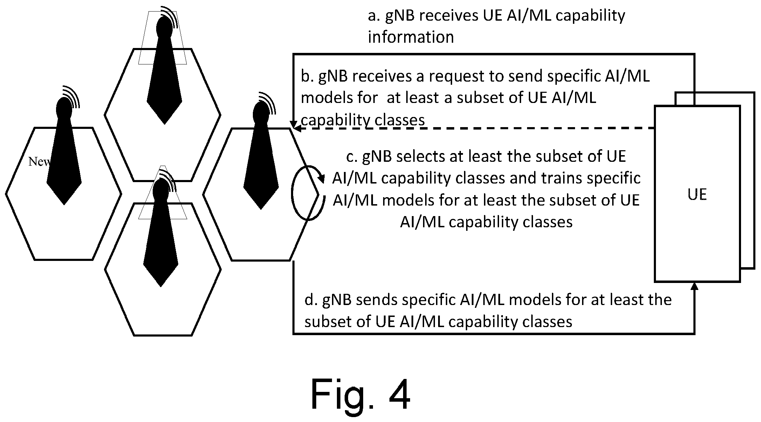

Figure 4 shows a schematic representation of a process for training AI/ML models specific for at least a subset of UE AI/ML capability classes at a gNB.

In step a) a gNB may receive UE AI/ML capability information from UEs. The UEs may be connected to the gNB. The gNB may identify a set of UE AI/ML capability classes. Each UE AI/ML capability class of the set of UE AI/ML capability classes may comprise a different combination of UE AI/ML capability information.

In step b) the gNB may receive requests from the UEs to send AI/ML models specific for at least a subset of UE AI/ML capability classes amongst the set of UE AI/ML capability classes.

In step c) the gNB may select at least the subset of UE AI/ML capability classes. The gNB may train AI/ML models specific for at least the subset of UE AI/ML capability classes.

In step d) the gNB may deploy the AI/ML models specific for at least the subset of UE AI/ML capability classes to the UEs.

One or more aspect of this disclosure configures a gNB to receive UE AI/ML capability information, to compute statistics for UE AI/ML capability classes based on UE AI/ML capability information and to provide the statistics for UE AI/ML capability classes to an OAM.

One or more aspect of this disclosure configures an OAM to train AI/ML models specific to UE AI/ML capability classes based on the statistics for UE AI/ML capability classes and to deploy the AI/ML models specific to UE AI/ML capability classes to the gNB. In this way, AI/ML model training constraints at the gNB may be addressed.

One or more aspect of this disclosure configures a gNB to deploy the AI/ML models specific to UE AI/ML capability classes to the UEs. The gNB may deploy the AI/ML models specific to UE AI/ML capability classes to the UEs in response to requests from the UEs or in response to a decision at the gNB.

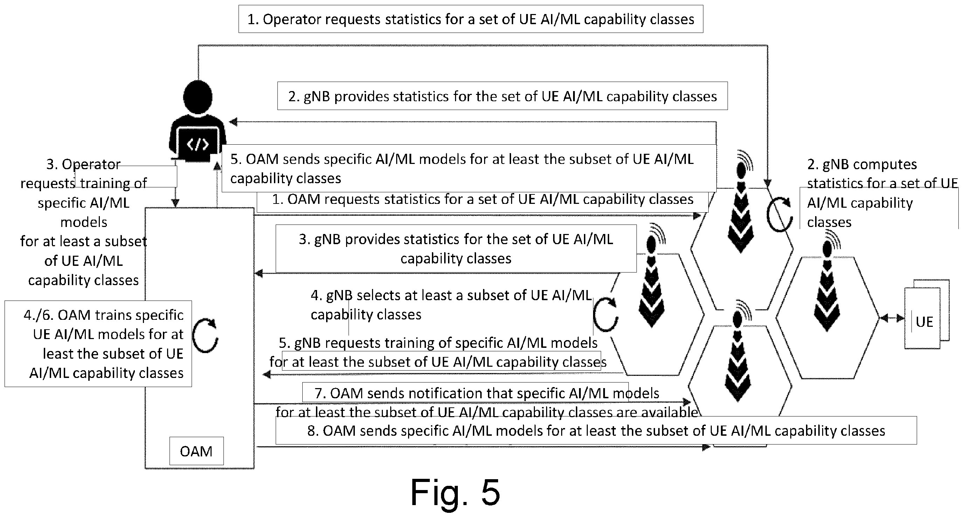

Figure 5 shows a schematic representation of a process for training AI/ML models specific for at least a subset of UE AI/ML capability classes at an OAM.

The process comprises three scenarios. The selection of at least a subset of UE AI/ML capability classes may be performed either at a gNB (first scenario), an OAM (second scenario) or an operator (third scenario). The third scenario may be performed in additionally or alternatively to the first and second scenarios.

In an initial step (not illustrated) a gNB may receive UE AI/ML capability information from UEs over one or more time granularity period. The UEs may be connected to the gNB. UE AI/ML capability information may comprise at least one of a memory space available at the UEs to store AI/ML models, a number of bits used by the UEs to represent an AI/ML model parameter (i.e. quantization) or a number of trainable AI/ML model parameters used by the UEs. An AI/ML model parameter may comprise a weight or a bias. A trainable AI/ML model parameter may be an AI/ML model parameter to be estimated during AI/ML model training. For example a neural network comprising two hidden layers and fifty hidden nodes per layer may comprise a total of 261K trainable AI/MI model parameters.

UE AI/ML capability information may comprise further UE AI/ML capability information such as an operating system used by the UEs or a computing processing unit load at the UEs. The further UE AI/ML capability information may or may not be received by the gNB.

In step 1 (first and second scenarios) an OAM may send a request to the gNB to compute statistics for a set of UE AI/ML capability classes based on the UE AI/ML capability information received from the UEs.

In step 1 (third scenario) an operator may send a request to the gNB to compute statistics for a set of UE AI/ML capability classes based on the UE AI/ML capability information received from the UEs.

The gNB may identify the set of UE AI/ML capability classes. Each UE AI/ML capability class may comprise a different combination of UE AI/ML capability information. An example set of UE AI/ML capability classes is illustrated in the table below.

| UE AI/ML capability class | Memory size (MB) | Quantization (bits) | | Maximum number of Trainable parameters | |
|---|---|---|---|---|---|
| | 1 | | | | |
| UE AI/ML capability class 1 | 6 | | 8 | | 500 K |
| | 1 | | | | 500 K |
| UE AI/ML capability class 2 | 6 | | 16 | | |
| | 3 | | | | 500 K |
| UE AI/ML capability class 3 | 2 | | 8 | | |
| | 3 | | | | 500 K |
| UE AI/ML capability class 4 | 2 | | 16 | | |
| | 6 | | | | 1000 K |
| UE AI/ML capability class 5 | 4 | | 8 | | |
| | 6 | | | | 1000 K |
| UE AI/ML capability class 6 | 4 | | 16 | | |

The gNB may identify the set of UE AI/ML capability classes based on the UE AI/ML capability information. Each UE AI/ML capability class of the set UE AI/ML capability classes may comprise at least one UE connected to the gNB. In other words, no UE AI/ML capability class of the set UE AI/ML capability classes comprises zero UE connected to the gNB. In this way, memory usage may be saved at the gNB.

The gNB may identify the set of UE AI/ML capability classes based on UE AI/ML capability classes predefined at the gNB. The set of UE AI/ML capability classes may comprise standardized UE AI/ML capability classes or clusters of standardized UE AI/ML capability classes. Standardizing UE AI/ML capability classes may be performed by benchmarking UE deployed in the 5GS.

The gNB may receive from the OAM the set of UE AI/ML capability classes identified by the OAM based on previous statistics for a set of UE AI/ML capability classes previously sent by the gNB to the OAM.

The gNB may receive from the OAM the set of UE AI/ML capability classes identified by the OAM based on UE AI/ML capability classes predefined at the OAM. The set of UE AI/ML capability classes may comprise standardized UE AI/ML capability classes or clusters of standardized UE AI/ML capability classes.

The statistics for the set of UE AI/ML capability classes may comprise a number of user equipment connected to the gNB over the one or more time granularity period for each UE AI/ML capability class of the set of UE AI/ML capability classes. An example of statistics for the set of UE AI/ML capability classes is illustrated in the table below.

| UE AI/ML capability class | Number of UEs | |
|---|---|---|
| Capability class 1 | | 100 |
| Capability class 2 | | 20 |
| Capability class 3 | | 0 |
| Capability class 4 | | 2 |
| Capability class 5 | | 80 |
| Capability class 6 | | 8 |

The statistics for the set of UE AI/ML capability classes may be used by the gNB or the OAM to select a subset of UE AI/ML capability classes amongst the set of UE AI/ML capability classes so that AL/ML models specific for the subset of UE AI/ML capability classes may be trained by the OAM.

The OAM or the operator may operate as an MnS consumer and the gNB may operate as a MnS producer. The OAM or the operator may create a job at the gNB to compute the statistics for the set of UE AI/ML capability classes over the one or more time granularity period. The OAM may create a job by creating an instance of a PerfMetricJob information object class (IOC) defined in 3GPP TS 28.622). The instance of the PerfMetricJob may specify a performance metrics, a time granularity period and a reporting method. The instance of the PerfMetricJob IOC may comprise a performanceMetrics attribute. The performanceMetrics attribute may indicate the performance metrics to be produced in the gNB. The performanceMetrics attribute may be defined in 3GPP TS28.552 to indicate that the gNB is required to compute the statistics for the set of UE AI/ML capability classes over the one or more time granularity period. The performance metrics may comprise a performance metrics (PM) counter UE-ML-Cap. UE-ML-Cap may be a table containing a number of UEs (i.e. an integer) connected to the gNB over the time granularity period for each AI/ML capability class of the set of AI/ML capability classes.

The UE-ML-Cap may be defined over "NRCellCU". For the PM counters in the standard, the managed object class that the measurement should be done may be addressed. Here "NRCellCU" is referring to the managed object class.

The OAM or the operator may create more different jobs at the gNB to compute the statistics for the set of UE AI/ML capability classes over different one or more time granularity periods.

In an example, the OAM or the operator may create a job at the gNB to compute the statistics for the set of UE AI/ML capability classes over a day. The gNB may send the statistics to the OAM to train AI/ML models specific for at least a subset of UE AI/ML capability classes amongst the set of UE AI/ML capability classes.

In an example, the OAM or the operator may create a job at the gNB to compute the statistics for the set of UE AI/ML capability classes over a week. The gNB may send the statistics to the OAM to train an AI/ML model generic for at least a subset of UE AI/ML capability classes amongst the set of UE AI/ML capability classes or to provide the statistics for the set of UE AI/ML capability classes to a management data analytics function to perform analyses and/or predictions. In step 2 the gNB may compute statistics for the set of UE AI/ML capability classes based on the UE AI/ML capability information from UEs.

The statistics for the set of UE AI/ML capability classes may be stored in a datatype SupportedPerfMetricGroup.

In step 2 (first, second and third scenario) the gNB may compute statistics for a set of UE AI/ML capability classes based on the UE AI/ML capability information received from the UEs.

In step 2 (third scenario) the gNB may send the statistics for the set of UE AI/ML capability classes to the operator.

In step 3 (first scenario) the gNB may send the statistics for the set of UE AI/ML capability classes to the OAM. The gNB may send the PM counter UE-ML-Cap as defined in 3GPP TS 28.552.

The OAM may select at least a subset of UE AI/ML capability classes amongst the set of UE AI/ML capability classes based on the statistics for the set of UE AI/ML capability classes. The OAM may select the whole set of UE AI/ML capability classes or only a subset of UE AI/ML capability classes amongst the set of UE AI/ML capability classes (e.g. the subset of UE AI/ML capability classes that most likely need to be updated).

Selecting at least the subset of UE AI/ML capability classes may comprise selecting at least the subset of UE AI/ML capability classes with one or more UE connected to the gNB over one or more time granularity period. Such option may not be the most efficient from the point of view of computational capacity usage.

Selecting at least the subset of UE AI/ML capability classes may comprise selecting at least the subset of UE AI/ML capability classes for which a specific UE AI/ML model is most likely to be requested by a UE or for which a specific UE AI/ML model is most needed to be updated. In this way, AI/ML model training by the OAM may be the proactive rather than reactive. Selecting at least the subset of UE AI/ML capability classes may comprise selecting at least the subset of UE AI/ML capability classes with the highest number of UEs connected to the gNB over one or more time granularity period. Selecting at least the subset of UE AI/ML capability classes may comprise selecting at least the subset of UE AI/ML capability classes with the highest change in the number of UEs connected to the gNB over one or more time granularity period.

In step 3 (third scenario) the operator may select at least a subset of UE AI/ML capability classes. The operator may send a request to the OAM to train specific AI/ML models for at least a subset of UE AI/ML capability classes or a generic AI/ML model for at least a subset of UE AI/ML capability classes. The operator may send a request to the OAM to deploy the specific AI/ML models for at least a subset of UE AI/ML capability classes or the generic AI/ML model for at least a subset of UE AI/ML capability classes.

In step 4 (second scenario) the gNB may select at least a subset of UE AI/ML capability classes amongst the set of UE AI/ML capability classes based on the statistics for the set of UE AI/ML capability classes. The gNB may select the whole set of UE AI/ML capability classes or only a subset of UE AI/ML capability classes amongst the set of UE AI/ML capability classes (e.g. a subset of UE AI/ML capability classes that needs to be updated).

Again, selecting at least the subset of UE AI/ML capability classes may comprise selecting at least the subset of UE AI/ML capability classes with one or more UE connected to the gNB over one or more time granularity period. Such option may not be the most efficient from the point of view of computational capacity usage.

Selecting at least the subset of UE AI/ML capability classes may comprise selecting at least the subset of UE AI/ML capability classes for which a specific UE AI/ML model is most likely to be requested by a UE or for which a specific UE AI/ML model is most needed to be updated. In this way, AI/ML model training by the OAM may be the proactive rather than reactive. Selecting at least the subset of UE AI/ML capability classes may comprise selecting at least the subset of UE AI/ML capability classes with the highest number of UEs connected to the gNB over one or more time granularity period. Selecting at least the subset of UE AI/ML capability classes may comprise selecting at least the subset of UE AI/ML capability classes with the highest change in the number of UEs connected to the gNB over one or more time granularity period.

In step 4 (third scenario) the OAM may train AI/ML models specific for at least the subset of UE AI/ML capability classes or may train an AI/ML model generic for at least the subset of UE AI/ML capability classes.

In step 5 (first and second scenarios) the gNB may send a request to the OAM to train AI/ML models specific for at least the subset of UE AI/ML capability classes selected by the gNB or to train an AI/ML model generic for at least the subset of UE AI/ML capability classes selected by the gNB.

The gNB may now operate as an MnS consumer and the OAM may operate as a MnS producer. The gNB may use the MLtrainingRequest IOC defined in 3GPP TS 28.105. A datatype MLmodelcontext may define the characteristics of the AI/ML model to be trained. The datatype MLmodelcontext may be extended with an new attribute that indicates a UE AI/ML capability class.

The MLtrainingRequest IOC may be associated with at least one MLEntity. The MLEntity may represent the properties of the ML training which is requested for the AI/ML model.

A MLContext is an attribute of the MLEntity. The MLContext attribute represents the status and conditions related to the MLEntity. The MLContext attribute may include the network context as defined in 3GPP TS 28.104 as well as other conditions that may be applicable to the MLEntity but are not part of network characteristics (e.g. the time of dayor season of the year). The MLContext may be declared by the MnS consumer when requesting for training, for example here the gNB may state the MLContext of the ML model that needs to be trained for each UE AI/ML capability class. To enable the MLEntity to train the AI/ML models specificfc for at least the subset of UE AI/ML capability classes, a new attribute UEMLcapClass may be added to MLContext attribute of the MLEntity. The MLContext is described in further detail below.

In step 5 (third scenario) the OAM may retrieve AI/ML models specific for at least the subset of UE AI/ML capability classes or an AI/ML model generic for at least the subset of UE AI/ML capability classes (already trained in step 3). The OAM may deploy the specific AI/ML models for at least the subset of UE AI/ML capability classes or the generic AI/ML model for at least the subset of UE AI/ML capability classes.

In step 6 (first scenario) the OAM may retrieve AI/ML models specific for at least the subset of UE AI/ML capability classes or an AI/ML model generic for at least the subset of UE AI/ML capability classes (if AI/ML model training was already done in step 3).

In step 6 (second scenario) the OAM may train AI/ML models specific for at least the subset of UE AI/ML capability classes or may train an AI/ML model generic for at least the subset of UE AI/ML capability classes (if AI/ML model training was not already done in step 3).

The OAM may train AI/ML models specific for at least the subset of UE AI/ML capability classes by considering the UE AI/ML capability classes in the datatype MLmodelcontext in the MLEntity to indicate the specific requirements and status of the specific ML models for those classes.

The OAM may train an AI/ML model generic for at least the subset of UE AI/ML capability classes. To do so, a new context may be added to the MLmodelcontext datatype in the MLEntity. The OAM may create a new virtual UE AI/ML capability class based on at least the subset of UE AI/ML capability classes as the new context (i.e. Vir-UE-Class) to be added to the MLmodelcontext. This UE AI/ML capability class may be created according to any implementation design approach.

A solution is to bias the AI/ML model generic for at least the subset of UE AI/ML capability classes based on the number of members of each AI/ML capability class of at least the subset of UE AI/ML capability classes and/or based on minimum requirements of at least the subset of UE AI/ML capability classes.

As an example, if the UE AI/ML capability classes 1, 2 and 3 have the highest number of members of UEs connected to the gNB over one or more time granularity periods, the new virtual UE AI/ML capability class taking the minimum requirements of these UE AI/ML capability classes 1, 2 and 3 may be defined in the table below.

| UE AI/ML capability class | Memory size (MB) | Quantization (bits) | Maximum number of Trainable parameters |
|---|---|---|---|
| Vir-UE-Class | 32 | 8 | 500 K |

The MLContext represents the status and conditions related to the MLEntity. The MLContext may comprise the UEMLcapClass attribute and the Vir-UE-Class attribute. The UEMLcapClass attribute may indicate a UE AI/ML capability class. The Vir-UE-Class attribute may indicate a virtual UE AI/ML capability class. The MLContext may be defined in the table below.

| Attribute name | Support Qualifier | isReadable | isWritable | isInvariant | isNotifyable |
|---|---|---|---|---|---|
| inferenceEntityRef | M | T | F | F | F |
| dataProviderRef | M | T | F | F | F |
| UEMLcapClass | O | T | T | F | T |
| Vir-UE-Class | O | T | T | F | T |

The UEMLcapClass attribute may comprise a Memorysize attribute, a Quantization attribute and a Max-trained attribute. The Memorysize attribute may indicate a memory space (in MB) available at a UE to store a model. The Quantization attribute may indicate a number of bits used by a UE to represent a model parameter. The Max-trained indicates a number of trainable model parameters used by a UE. The UEMLcapClass attribute may be defined in the table below.

| Attribute name | Support Qualifier | isReadable | isWritable | isInvariant | isNotifyable |
|---|---|---|---|---|---|
| UEMLcapClassRef | M | T | F | F | F |
| Memorysize | M | T | T | F | T |
| Quantization | M | T | T | F | T |
| Max-trained | M | T | T | F | T |

The Vir-UE-Class may comprise a Memorysize attribute, a Quantization attribute and a Max-trained attribute. The Memorysize attribute may indicate a memory space (in MB) available at a UE to store a model. The Quantization attribute may indicate a number of bits used by a UE to represent a model parameter. The Max-trained indicates a number of trainable model parameters used by a UE. The Vir-UE-Class attribute may be defined as in the table below.

| Attribute name | Support Qualifier | isReadable | isWritable | isInvariant | isNotifyable |
|---|---|---|---|---|---|
| Vir-UE-ClassRef | M | T | F | F | F |
| Memorysize-gen | M | T | F | F | T |
| Quantization-gen | M | T | F | F | T |
| Max-trained-gen | M | T | F | F | T |

In step 7 (first and second scenarios) the gNB may subscribe with the OAM to receive a notification that the AI/ML models specific for at least the subset of UE AI/ML capability classes are available or that the AI/ML model generic for at least the subset of UE AI/ML capability classes is available.

The OAM may send a notification to the gNB that theAl/ML models specific for at least the subset of UE AI/ML capability classes are available or that the AI/ML model generic for at least the subset of UE AI/ML capability classes is available.

Once the AI/ML models specific for at least the subset of UE AI/ML capability classes or the AI/ML model generic for at least the subset of UE AI/ML capability classes are trained by the OAM, the MLmodelcontext of the AI/ML models specific for at least the subset of UE AI/ML capability classes or the AI/ML model generic for at least the subset of UE AI/ML capability classes may be notified to the gNB. The gNB may subscribe to be notified about the MLmodelcontext of the AI/ML models specific for at least the subset of UE AI/ML capability classes or the AI/ML model generic for at least the subset of UE AI/ML capability classes. The OAM may use the MLmodelcontextReport defined in 3GPP TR28.908 to notify UEMLcapClass or Vir-UE-Class to the gNB.

The gNB may send a request to the OAM to deploy the AI/ML models specific for at least the subset of UE AI/ML capability classes or to deploy the AI/ML model generic for at least the subset of UE AI/ML capability classes.

In step 8 (first and second scenarios) the OAM may deploy the AI/ML models specific for at least the subset of UE AI/ML capability classes to the gNB.

Alternatively the OAM may transform (e.g. prune) the AI/ML model generic for at least the subset of UE AI/ML capability classes into AI/ML models specific for at least the subset of UE AI/ML capability classes. The OAM may deploy the AI/ML models specific for at least the subset of UE AI/ML capability classes to the gNB.

For example, a UE AI/ML capability class amongst the subset of UE AI/ML capability classes may have a lower number of bits used to represent an AI/ML model parameter (i.e. quantization). In this case, the AI/ML model generic for at least the subset of UE AI/ML capability classes may be transformed (e.g. quantized) to work with the lower number of bits.

Alternatively, the OAM may deploy the /ML model generic for at least the subset of UE AI/ML capability classes to the gNB. The gNB may transform (e.g. prune) the AI/ML model generic for at least the subset of UE AI/ML capability classes into AI/ML models specific for at least the subset of UE AI/ML capability classes.

The OAM may use the MLtrainingReport defined in TS28.105. First the OAM may update the attribute requestStatus in the MLTrainingRequest to FINISHED and then the MLTrainingReport instance provides the ML model training report to the gNB.

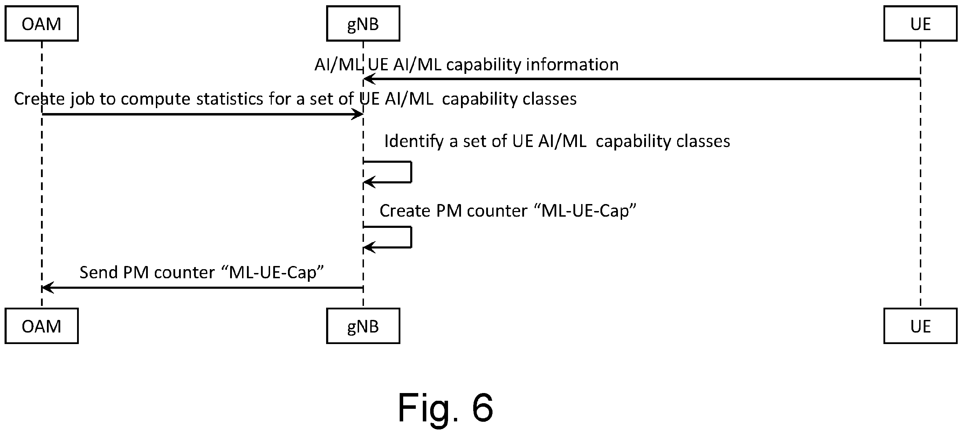

Figure 6 shows a signaling diagram of a process for computing statistics for a set of UE AI/ML capability classes.

A gNB may receive UE AI/ML capability information from UEs.

An OAM may create a job at the gNB to compute statistics for the set of UE AI/ML capability classes over one or more time granularity period. The OAM may create instance of a PerfMetricJob IOC at the gNB. The instance of the PerfMetricJob may specify a performance metrics, a time granularity period and a reporting method. The performance metrics may indicate a PM counter "UE-ML-Cap".

The gNB may identify the set of UE AI/ML capability classes.

The gNB may create the PM counter "UE-ML-Cap".

The gNB may send the PM counter "UE-ML-Cap" to the OAM.

As discussed the selection of at least the subset of UE AI/ML capability classes is performed either at the gNB (first scenario), the OAM (second scenario) or the operator (third scenario).

In the first scenario, once the statistics for the UE All ML capability classes are created by the gNB, the gNB (operating as a MnS consumer) may select at least a subset of UE AI/ ML capability classes amongst a set of UE AI/ ML capability classes. The gNB may send a request to the OAM (operating as the Mns producer) to train AI/ML models specific for at least the subset of UE AI/ ML capability classes or an AI/ML model generic for at least the subset of UE All ML capability classes. The OAM may train AI/ML models specific for at least the subset of UE All ML capability classes or an AI/ML model generic for at least the subset of UE AI/ ML capability classes. The OAM may send the AI/ML models specific for at least the subset of UE AI/ ML capability classes or an AI/ML model generic for at least the subset of UE AI/ ML capability classes to the gNB.

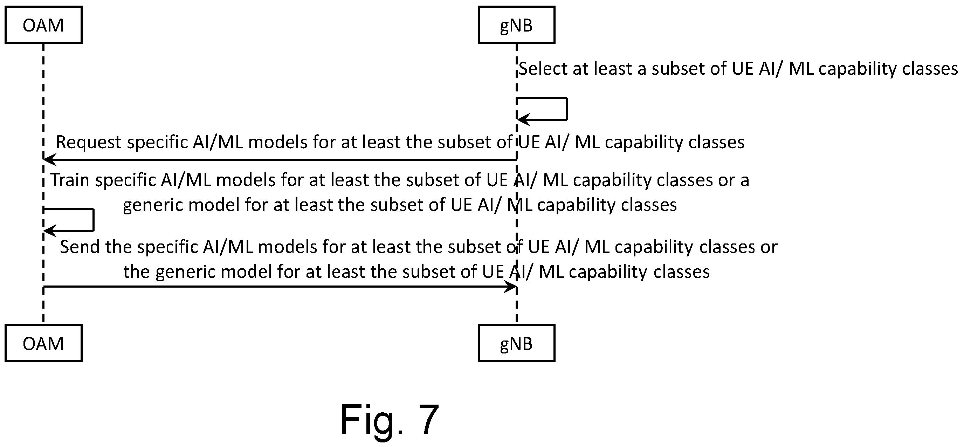

Figure 7 shows a signaling diagram of a process for training AI/ML models specific for at least a subset of UE AI/ML capability classes at the OAM according to the first scenario.

In the second scenario, once the statistics for the UE All ML capability classes are created by the gNB, the gNB (operating as a MnS consumer) send the the statistics for the UE All ML capability classes to the OAM. The OAM may select at least a subset of UE AI/ ML capability classes amongst a set of UE AI/ ML capability classes. The OAM may train AI/ML models specific for at least the subset of UE AI/ ML capability classes or an AI/ML model generic for at least the subset of UE AI/ ML capability classes. The gNB may send a request to the OAM (operating as the Mns producer) to train AI/ML models specific for at least the subset of UE AI/ ML capability classes or an AI/ML model generic for at least the subset of UE All ML capability classes. The OAM may send the AI/ML models specific for at least the subset of UE All ML capability classes or an AI/ML model generic for at least the subset of UE AI/ ML capability classes to the gNB.

In the second scenario, the OAM may train AI/ML models specific for at least the subset of UE All ML capability classes or an AI/ML model generic for at least the subset of UE AI/ ML capability classes in advance (before received the request from the gNB) and therefore may be able to respond to the gNB quicker.

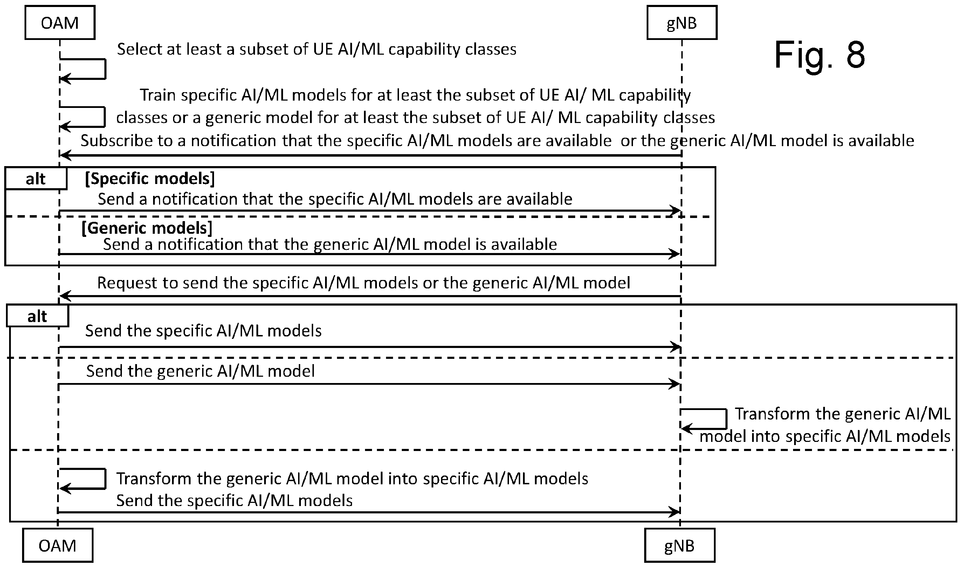

Figure 8 shows a signaling diagram of another process for training AI/ML models specific for at least a subset of UE AI/ML capability classes at the OAM according to the second scenario.

One or more aspect of this disclosure may address one or more of the technical problem listed above. AI/ML model training is time consuming and resource consuming. A gNB has less computation capacity compared to an OAM hence, by introducing the PM counter "UE-ML-Cap", the OAM may be able to train specific AI/ML models for UE AI/ML capability classes or a generic AI/ML model for UE AI/ML capability classes. The specific AI/ML models or the generic AI/ML model may be trained in advance so that a gNB can immediately reply to UE requests to receive specific AI/ML models for UE AI/ML capability classes. This aspect is beneficial in implementations where the UE requires specific AI/ML models for UE AI/ML capability classes with minimum delay.

One or more aspect of this disclosure is advantageous in that it may be independent of any definition for UE AI/ML capability classes and it may be applied to any UE AI/ML capability classes.

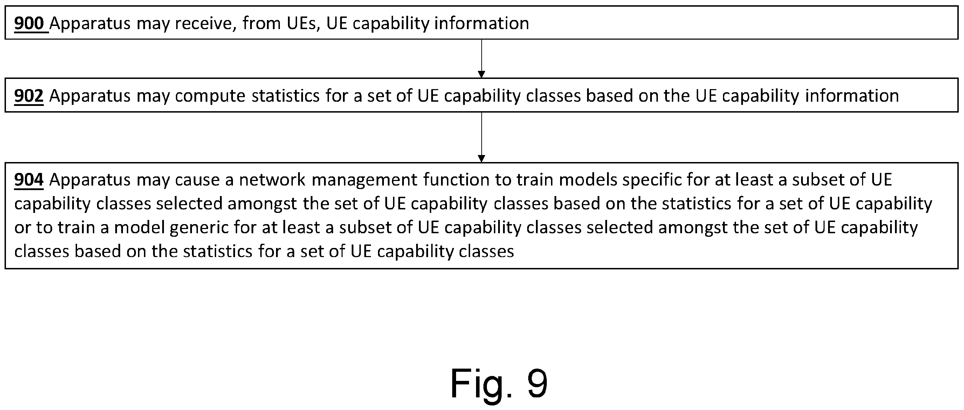

Figure 9 shows a block diagram of a process for training models specific for at least a subset of UE capability classes at a network management function performed by an apparatus, such as a BS (gNB).

In step 900, the apparatus may receive, from UEs, UE capability information.

In step 902, the apparatus may compute statistics for a set of UE capability classes based on the UE capability information.

In step 904, the UE may cause a network management function to train models specific for at least a subset of UE capability classes selected amongst the set of UE capability classes based on the statistics for a set of UE capability or to train a model generic for at least a subset of UE capability classes selected amongst the set of UE capability classes based on the statistics for a set of UE capability classes.

Selecting at least a subset of UE capability classes amongst the set of UE capability classes may comprise selecting a subset of UE capability classes amongst the set of UE capability classes or selecting the whole set of UE capability classes.

The UE capability information may comprise at least one of: a memory space available at the UE to store a model; a number of bits used by the UE to represent a model parameter; or a number of trainable model parameters used by the UE.

Each UE capability class of the set of UE capability classes may comprise a different combination of UE capability information.

The apparatus may identify the set of UE capability classes based on the UE capability information. The apparatus may identify the set of UE capability classes based on UE capability classes predefined at the apparatus. The apparatus may receive, from the network management function, the set of UE capability classes identified by the network management function based on previous statistics for a previous set of UE classes sent by the apparatus to the network management function. The apparatus may receive, from the network management function, the set of UE capability classes identified by the network management function based on UE capability classes predefined at the network management function.

The statistics for the set of UE capability classes may comprise a number of UE connected to the apparatus for each UE capability class of the set of UE capability classes.

The apparatus may receive, from the network management function, a request to compute the statistics for the set of UE capability classes based on the UE capability information.

The apparatus may send, to a network management function, the statistics for the set UE capability classes to cause the network management function to select at least the subset of UE capability classes amongst the set of UE capability classes based on the statistics for the set of UE capability classes and to train the models specific for at least the subset of UE capability classes or the model generic for at least the subset of UE capability classes.

The apparatus may select at least the subset of UE capability classes amongst the set of UE capability classes based on the statistics for the set UE capability classes. The apparatus may send, to the network management function, at least the subset of UE capability classes to cause the network management function to train the models specific for at least the subset of UE capability classes or the model generic for at least part the subset of UE capability classes.

Selecting at least the subset of UE capability classes amongst the set of UE capability classes based on the statistics for the set UE capability classes may comprise: selecting at least the subset of UE capability classes with one ore more UE connected to the apparatus over one or more time period; selecting at least the subset of UE capability classes with the highest number of UE connected to the apparatus over one or more time period; or selecting at least the subset of UE capability classes with the highest change in the number of UE connected to the apparatus over one or more time period.

The apparatus may subscribe, with the network management function, to a notification that the models specific for at least the subset of UE capability classes are available or a notification that the model generic for at least the subset of UE capability classes is available. The apparatus may receive, from the network management function, the notification that the models specific for at least the subset of UE capability classes are available or the notification that the model generic for at least the subset of UE capability classes is available.

The apparatus may send, to the network management function, a request to receive the models specific for at least the subset of UE capability classes or the model generic for at least the subset of UE capability classes.

The apparatus may receive, from the network management function, the models specific for at least the subset of UE capability classes or the model generic for at least the subset of UE capability classes.

The apparatus may transform the model generic for at least the subset of UE capability classes into models specific for the subset of UE capability classes.

The apparatus may send, to the UE, the models specific for at least the subset of UE capability classes.

The models specific for at least a subset of UE capability classes may be designed for allowing the UE to perform internal machine learning-based algorithms. An example of internal machine learning-based algorithm may be an internal machine learning-based algorithm managing beamforming at the UE.

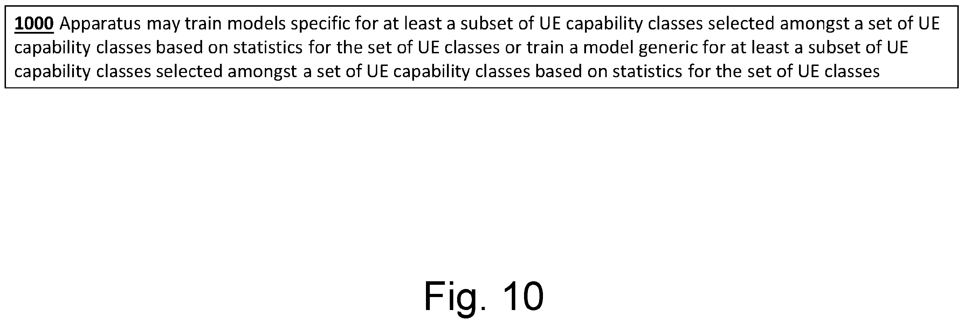

Figure 10 shows a block diagram of a process for training models specific for at least a subset of UE capability classes at a network management function performed by an apparatus such as the network management function (e.g. core network function or OAM).

In step 1000, the apparatus may train models specific for at least a subset of user equipment capability classes selected amongst a set of UE capability classes based on statistics for the set of UE classes or train a model generic for at least a subset of UE capability classes selected amongst a set of UE capability classes based on statistics for the set of UE classes.

The apparatus may receive, from a base station, previous statistics for a previous set of UE classes. The apparatus may identify the set of UE capability classes based on the previous statistics for the previous set of UE classes. The apparatus may send, to the base station, the set of UE capability classes.

The apparatus may identify the set of UE capability classes based on UE capability classes predefined at the apparatus. The apparatus may send, to a base station, the set of UE capability classes.

The apparatus may send, to a base station, a request to compute statistics for the set of UE capability classes based on UE capability information received by the base station from UE.

The apparatus may receive, from a base station, the statistics for the set of UE capability classes. The apparatus may select at least the subset of UE capability classes amongst the set of UE capability classes based on the statistics for the set of UE capability classes. The apparatus may train the models specific for at least the subset of UE capability classes or the model generic for at least the subset of UE capability classes.

The apparatus may receive, from a base station, at least the subset of UE capability classes selected amongst the set of UE capability classes by the base station based on the statistics for the set UE capability classes. The apparatus may train the models specific for at least the subset of UE capability classes or the model generic for at least the subset of UE capability classes.

The apparatus may send, to a base station, a notification that the models specific for at least the subset of UE capability classes are available or the notification that the model generic for at least the subset of UE capability classes is available.

The apparatus may receive, from a base station, a request to send the models specific for at least the subset of UE capability classes or the model generic for at least the subset of UE capability classes.

The apparatus may send, to a base station, the models specific for at least the subset of UE capability classes or the model generic for at least the subset of UE capability classes.

The apparatus may transform the model generic for at least the subset of UE capability classes into models specific for the subset of UE capability classes.

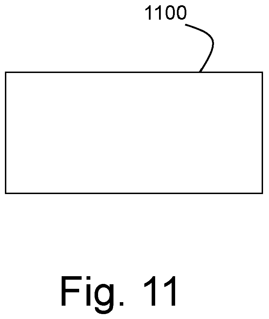

Figure 11 shows a schematic representation of non-volatile memory media 1100 storing instructions and/or parameters which when executed by a processor allow the processor to perform one or more of the steps of the methods of Figures 9 and 10.

It is noted that while the above describes example embodiments, there are several variations and modifications which may be made to the disclosed solution without departing from the scope of the present invention.

It will be understood that although the above concepts have been discussed in the context of a 5GS, one or more of these concepts may be applied to other cellular systems.

The embodiments may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments may be implemented by computer software stored in a memory and executable by at least one data processor of the involved entities or by hardware, or by a combination of software and hardware. Further in this regard it should be noted that any procedures, e.g., as in Figures 9 and 10, may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Alternatively or additionally some embodiments may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:
(a) hardware-only circuit implementations (such as implementations in only analogue and/or digital circuitry);
(b) combinations of hardware circuits and software, such as:
   (i) a combination of analogue and/or digital hardware circuit(s) with software/firmware and
   (ii) any portions of hardware processor(s) with software (including digital signal processor(s)), software, and memory(ies) that work together to cause an apparatus, such as the communications device or base station to perform the various functions previously described; and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of exemplary and non-limiting examples a full and informative description of some embodiments However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

## Claims

1. An apparatus comprising at least one processor and at least one memory including computer code for one or more programs, the at least one memory and the computer code configured, with the at least one processor, to cause the apparatus at least to:
receive, from user equipment, user equipment capability information;
compute statistics for a set of user equipment capability classes based on the user equipment capability information; and
cause a network management function to train models specific for at least a subset of user equipment capability classes selected amongst the set of user equipment capability classes based on the statistics for a set of user equipment capability or to train a model generic for at least a subset of user equipment capability classes selected amongst the set of user equipment capability classes based on the statistics for a set of user equipment capability classes.

2. The apparatus of claim 1, wherein the user equipment capability information comprises at least one of:
a memory space available at the user equipment to store a model;
a number of bits used by the user equipment to represent a model parameter; or
a number of trainable model parameters used by the user equipment.

3. The apparatus of claim 1 or claim 2, each user equipment capability class of the set of user equipment capability classes comprises a different combination of user equipment capability information.

4. The apparatus of any of claims 1 to 3, wherein the at least one memory and the computer code are configured, with the at least one processor, to cause the apparatus at least to:
identify the set of user equipment capability classes based on the user equipment capability information;
identify the set of user equipment capability classes based on user equipment capability classes predefined at the apparatus;
receive, from the network management function, the set of user equipment capability classes identified by the network management function based on previous statistics for a previous set of user equipment classes sent by the apparatus to the network management function; or
receive, from the network management function, the set of user equipment capability classes identified by the network management function based on user equipment capability classes predefined at the network management function.

5. The apparatus of any of claims 1 to 4, wherein the statistics for the set of user equipment capability classes comprises a number of user equipment connected to the apparatus for each user equipment capability class of the set of user equipment capability classes.

6. The apparatus of any one of claims 1 to 5, wherein the at least one memory and the computer code are configured, with the at least one processor, to cause the apparatus at least to:
receive, from the network management function, a request to compute the statistics for the set of user equipment capability classes based on the user equipment capability information.

7. The apparatus of any of claims 1 to 6, wherein the at least one memory and the computer code are configured, with the at least one processor, to cause the apparatus at least to:
send, to a network management function, the statistics for the set user equipment capability classes to cause the network management function to select at least the subset of user equipment capability classes amongst the set of user equipment capability classes based on the statistics for the set of user equipment capability classes and to train the models specific for at least the subset of user equipment capability classes or the model generic for at least the subset of user equipment capability classes.

8. The apparatus of any of claims 1 to 7, wherein the at least one memory and the computer code are configured, with the at least one processor, to cause the apparatus at least to:
select at least the subset of user equipment capability classes amongst the set of user equipment capability classes based on the statistics for the set user equipment capability classes; and
send, to the network management function, at least the subset of user equipment capability classes to cause the network management function to train the models specific for at least the subset of user equipment capability classes or the model generic for at least part the subset of user equipment capability classes.

9. The apparatus of any of claims 1 to 8, wherein the at least one memory and the computer code are configured, with the at least one processor, to cause the apparatus at least to:
subscribe, with the network management function, to a notification that the models specific for at least the subset of user equipment capability classes are available or a notification that the model generic for at least the subset of user equipment capability classes is available; and
receive, from the network management function, the notification that the models specific for at least the subset of user equipment capability classes are available or the notification that the model generic for at least the subset of user equipment capability classes is available.

10. The apparatus of any of claims 1 to 9, wherein the at least one memory and the computer code are configured, with the at least one processor, to cause the apparatus at least to:
send, to the network management function, a request to receive the models specific for at least the subset of user equipment capability classes or the model generic for at least the subset of user equipment capability classes.

11. The apparatus of any of claims 1 to 10, wherein the at least one memory and the computer code are configured, with the at least one processor, to cause the apparatus at least to:
receive, from the network management function, the models specific for at least the subset of user equipment capability classes or the model generic for at least the subset of user equipment capability classes.

12. An apparatus comprising at least one processor and at least one memory including computer code for one or more programs, the at least one memory and the computer code configured, with the at least one processor, to cause the apparatus at least to:
train models specific for at least a subset of user equipment capability classes selected amongst a set of user equipment capability classes based on statistics for the set of user equipment classes or train a model generic for at least a subset of user equipment capability classes selected amongst a set of user equipment capability classes based on statistics for the set of user equipment classes.

13. The apparatus of claim 12, wherein the at least one memory and the computer code are configured, with the at least one processor, to cause the apparatus at least to:
receive, from a base station, previous statistics for a previous set of user equipment classes;
identify the set of user equipment capability classes based on the previous statistics for the previous set of user equipment classes; and
send, to the base station, the set of user equipment capability classes.

14. The apparatus of claim 12, wherein the at least one memory and the computer code are configured, with the at least one processor, to cause the apparatus at least to:
identify the set of user equipment capability classes based on user equipment capability classes predefined at the apparatus; and
send, to a base station, the set of user equipment capability classes.

15. The apparatus of any of claims 12 to 14, wherein the at least one memory and the computer code are configured, with the at least one processor, to cause the apparatus at least to:
send, to a base station, a request to compute statistics for the set of user equipment capability classes based on user equipment capability information received by the base station from user equipment.
